Europäisches Patentamt

European Patent Office

Office européen des brevets

(11) Veröffentlichungsnummer : **0 341 517 B1**

# EUROPÄISCHE PATENTSCHRIFT

(12)

(45) Veröffentlichungstag der Patentschrift :
**22.01.92 Patentblatt 92/04**

(21) Anmeldenummer : **89107784.4**

(22) Anmeldetag : **28.04.89**

(51) Int. Cl.⁵ : **A01F 15/08**

(54) **Grossballenpresse.**

(30) Priorität : **11.05.88 DE 3816219**

(43) Veröffentlichungstag der Anmeldung :
**15.11.89 Patentblatt 89/46**

(45) Bekanntmachung des Hinweises auf die
Patenterteilung :
**22.01.92 Patentblatt 92/04**

(84) Benannte Vertragsstaaten :
**AT DE FR GB**

(56) Entgegenhaltungen :
**EP-A- 0 129 021**
**EP-A- 0 160 349**
**DE-A- 3 418 681**

(73) Patentinhaber : **GREENLAND GMBH & CO. KG**
**Erwin-Dietrich-Platz 1**
**W-7702 Gottmadingen (DE)**

(72) Erfinder : **Güsewell, Eike**
**Rielasinger Strasse 57**
**W-7702 Gottmadingen (DE)**
Erfinder : **Maier, Egon**
**Storzlerstrasse 13**
**W-7709 Hilzingen-Riedheim (DE)**
Erfinder : **Wölfle, Hans-Peter**
**Gartenstrasse 28**
**W-7702 Gottmadingen (DE)**

(74) Vertreter : **Patentanwälte Grünecker,**
**Kinkeldey, Stockmair & Partner**
**Maximilianstrasse 58**
**W-8000 München 22 (DE)**

EP 0 341 517 B1

## Beschreibung

Die Erfindung bezieht sich auf eine Großballenpresse der im Oberbegriff von Anspruch 1 erläuterten Art.

Großballenpressen finden aufgrund ihrer großen Flächenleistung von mehreren Hektar pro Stunde, wodurch auch kurze Schönwetterzeiten genutzt werden können, immer weitere Verbreitung. Die meisten derartigen Pressen sind Rundballenpresen, wobei das von einer Aufnhamevorrichtung dem Preßraum zugeführte Halmgut durch am Umfang der Preßkammer angeordnete Preßwalzen zu einem runden Ballen geformt wird, der anschließend gebunden wird.

Aus der DE-PS 3418681 ist eine Rollballenpresse der genannten Art ersichtlich, bei der die Abtrennvorrichtung für die Mantelbahn, mit der der Rollballen umwickelt wird, aus einer schwenkbaren Schlagmesserleiste besteht, die mit einem als Gegenschneide ausgebildeten Amboß zusammenwirkt. Die Schlagmesserleiste trifft dabei mit ihrer spitzen Schneidkante auf eine ebene Fläche des als Stahlstab ausgebildeten Amboß, wobei die Schlagrichtung der Schlagmesserleiste etwa senkrecht zur Zugrichtung des Hüllmaterials liegt.

Mit einem neuen Schlagmesser und einem neuen Amboß werden mit einer derartigen Vorrichtung saubere Trennkanten erzielt, die sich gut an die Außenseite des Großballens anlegen, wobei die Enden sicher beim Beginn des nächsten Umwicklungszyklus mitgenommen werden.

Es hat sich jedoch herausgestellt, daß nach längeren Betriebszeiten die glatte Oberfläche des Amboß ebenso wie die Schneidkante des Schlagmessers selbst Scharten aufweisen, so daß beim Trennvorgang einzelne Längsfäden des Hüllmaterials nicht abgetrennt werden, was zu erheblichen Störungen führen kann.

Die EP-A 160349 betrifft eine Schneidvorrichtung für Papierbahnen, bei der ein gezahntes Messer gegen einen aus zwei Teilen bestehenden Amboß arbeitet. Der obere Teil des Ambosses ist mit zueinander parallelen, jedoch in Schneidrichtung und im wesentlichen senkrecht zum Messer verlaufenden Ausnehmungen versehen. Eine solche Ausgestaltung ist für das Schneiden einer Netzbahn in einer Großballenpresse nicht geeignet, da die Gefahr besteht, daß das Netz nicht geschnitten sondern durch Hängenbleiben an den Stirnseiten des Ambosses gerissen wird.

Der Erfindung liegt somit die Aufgabe zugrunde, eine Großballenpresse vorzuschlagen, bei der auch nach langen Betriebszeiten einwandfreie, saubere Trennkanten beim Abtrennen des Umwicklungsmaterials erzielt werden.

Die Aufgabe wird durch die kennzeichnenden Merkmale des Anspruchs 1 gelöst.

Mit der Erfindung wird der Vorteil erzielt, daß durch die parallel zur auftreffenden Schlagmesserleiste vorgesehenen Längsriefen im Amboß jederzeit ein glatter sauberer Schnitt der Netzbahn erzielt wird, mit der der Großballen umwickelt wird. Dies wird insbesondere dadurch erzielt, daß die Schlagmesserleiste eine gewisse Elastizität aufweist und beim wuchtigen Auftreffen auf den Amboß in Richtung ihrer Bewegung etwas verformt wird, so daß sie beim Eindringen in die ihr nächstliegende Aussparung auch solche Längsfäden der Netzbahn abtrennt, die nicht beim sofortigen Auftreffen, z.B. aufgrund des Vorhandenseins einer Scharte, abgetrennt worden sind.

Der Querschnitt einer jeden Aussparung kann dabei V-förmig sein mit gleich langen oder ungleich langen Schenkeln des V oder aber halbkreisförmig sein.

Ein vorteilhaftes Ausführungsbeispiel der Erfindung wird nachfolgend anhand der Zeichnungen näher erläutert. Es zeigen :

| Figur 1 | schematisch einen Querschnitt durch eine Großballenpresse mit einer erfindungsgemäßen Abtrennvorrichtung, |
| Figur 2 | eine vergrößerte Darstellung von Schlagmesserleiste und Amboß und |
| Figuren 3 bis 5 | drei Querschnitte durch den Amboß mit unterschiedlichen Querschnitten der Aussparungen. |

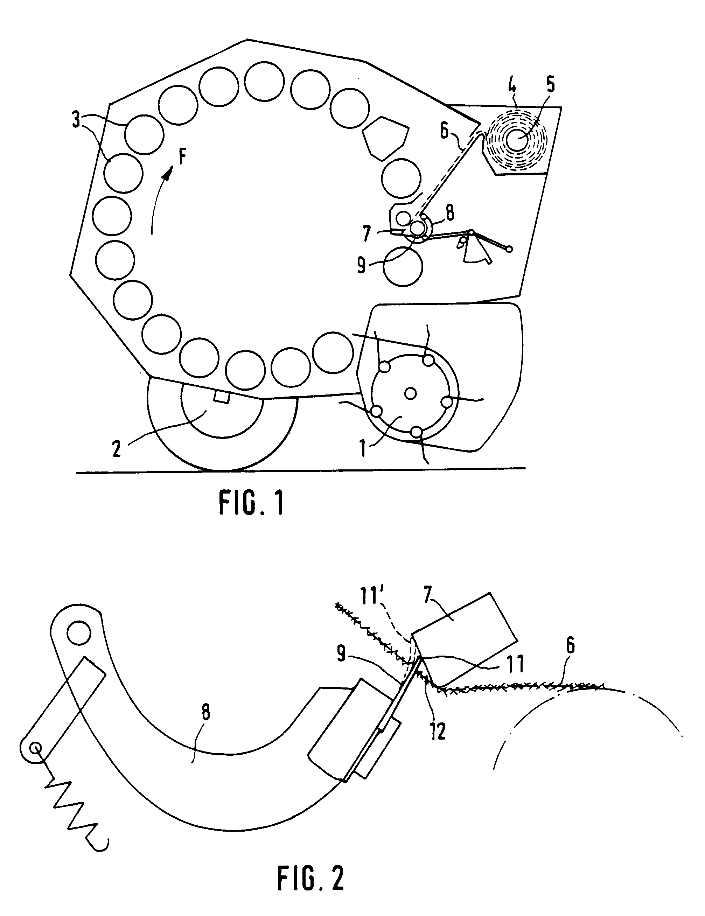

In Figur 1 ist schematisch ein Schnitt durch eine herkömmliche Großballenpresse gezeigt, die ein zweiteiliges Preßraumgehäuse aufweist, das sich über ein Laufrad 2 auf dem Boden abstützt und das mit einer Vielzahl von Preßwalzen 3 versehen ist, die den Preßraum begrenzen. Das landwirtschaftliche Halmgut wird durch eine herkömmliche Aufnahmevorrichtung 1 dem Inneren des Preßraums zugeführt, wobei ein sich in Richtung des Pfeiles F drehender, nicht dargestellter Großballen ausgebildet wird.

Mit 4 ist eine Vorratsrolle für das Umwicklungsmaterial für den fertigen Großballen bezeichnet, wobei dies Material z.B. aus einer Netzbahn 6 bestehen kann, die nach der Ausbildung des Großballens um diesen herumgeführt wird. Die Netzbahn kann über eine Umlenkkante und ein Leitblech gezogen und zwischen zwei Abzugswalzen hindurchgeführt werden. Mit 7, 8, 9 ist eine Abtrennvorrichtung zum Durchtrennen der Netzbahn nach der Umwicklung des Großballens bezeichnet. Dabei bildet ein Messerträger 8 mit einem Schlagmesser 9 die Schlagmesserleiste, die unter der Einwirkung einer geeigneten Feder wuchtig auf einen gestellfesten Amboß 7 auftrifft, um so die Netzbahn 6 über ihre gesamte Breite abzutrennen. Der Amboß 7 kann dabei aus einem blanken Flachstahl bestehen mit einer Oberfläche 12, auf die das Schlagmesser 9 mit seiner Vorderkante 11 auftrifft. Figur 2 läßt erkennen, daß aufgrund der großen Auftreffwucht eine geringfügige Verformung (11') des Schlagmessers 9 beim Auftreffen auf die Fläche 12 auftritt.

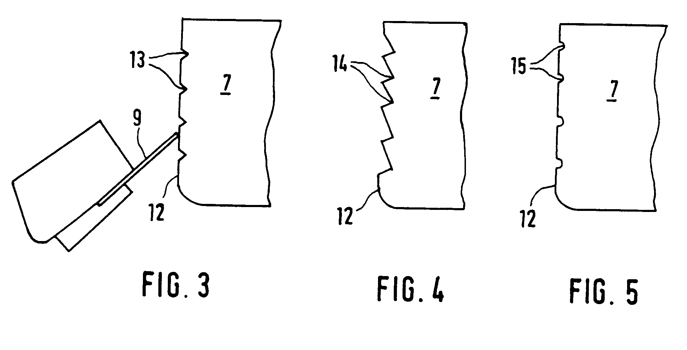

Erfindungsgemäß ist nun die Fläche 12 des Amboß 7, auf die das Schlagmesser 9 auftrifft, mit einer Vielzahl von parallelen im Abstand voneinander angeordneten und sich parallel zur Längskante des Schlagmessers 9 erstreckenden Aussparungen 13, 14, 15 versehen (Figuren 3, 4, 5). Diese Aussparungen können gemäß Figur 3 eine V-Form mit gleich langen Schenkeln des V aufweisen oder gemäß Figur 4 eine V-Form mit ungleich langen Schenkeln des V oder aber wie in Figur 5 dargestellt, halbkreisförmig sein.

Beim Auftreffen auch einer schartig gewordenen Schlagmesserleiste auf diese Fläche 12 des Amboß 7 verformt sich, wie in Figur 2 dargestellt, das Schlagmesser 9 geringfügig und dringt dabei in eine der Aussparungen 13, 14, 15 ein, so daß auch bei einem schartig gewordenen Schlagmesser eine sichere Abtrennung der einzelnen Längsfäden der Netzbahn 6 erzielt wird.

Die Steuerung der Schlagmesserleiste, d.h. der zeitliche Zeitpunkt, zu dem der Abtrennvorgang ausgelöst wird, erfolgt in herkömmlicher Weise über Schaltsegmente, Koppelstangengelenkachsen, Zugfedern und z.B. ein Schrittschaltwerk.

**Patentansprüche**

1. Großballenpresse für landwirtschaftliches Halmgut mit einer Umwicklungsvorrichtung zum Umwickeln des Großballens mit einer Netzbahn, wobei eine parallel zur Mittelachse des Preßraums angeordnete Vorratsrolle (4) für die Netzbahn (6) vorgesehen ist, eine ein- und ausschaltbare Abzugsvorrichtung für die Netzbahn (6) von der Vorratsrolle (4) und zum Einführen der Netzbahn (6) in den Preßraum und eine Abtrennvorrichtung (7, 8, 9) zum Durchtrennen der Netzbahn (6) zwischen der Vorratsrolle (4) und dem Preßraum, die aus einer schwenkbaren, gegen Federmittel vorspannbaren Schlagmesserleiste (8, 9) und einem als Gegenschneide ausgebildeten gestellfesten Amboß (7) besteht, **dadurch gekennzeichnet,** daß die von der Schlagmesserleiste (8, 9) beaufschlagte Fläche (12) des Amboß (7) mit einer Vielzahl von sich parallel zur Schlagmesserleiste (8, 9) erstreckenden und im Abstand voneinander angeordneten Aussparungen (13, 14, 15) versehen ist.

2. Großballenpresse nach Anspruch 1, **dadurch gekennzeichnet,** daß der Querschnitt einer jeden Aussparung (13) V-förmig ist, und daß die Schenkel des V gleich lang sind.

3. Großballenpresse nach Anspruch 1, **dadurch gekennzeichnet,** daß der Querschnitt einer jeden Aussparung (14) V-förmig ist, und daß die Schenkel des V ungleich lang sind.

4. Großballenpresse nach Anspruch 1, **dadurch gekennzeichnet,** daß der Querschnitt einer jeden Aussparung (15) halbkreisförmig ist.

**Claims**

1. Big roll baler for agricultural stalk material, including a wrapping device for wrapping the big bale with a web of netting (6), a supply reel (4) being provided for the web of netting and being disposed parallel to the central axis of the pressing chamber, an unwinding device, which is switchable on and off, for unwinding the web of netting (6) from the supply reel (4) and for introducing the web of netting (6) into the pressing chamber, and a cutting device (7, 8, 9) for severing the web of netting (6) disposed between the supply reel (4) and the pressing chamber, which cutting device comprises a pivotable impact cutter bar (8, 9), which is prestressable in opposition to resilient means, and an anvil (7) which is secured to the frame and is in the form of a counter-cutting edge, characterised in that the face (12) of the anvil (7), acted upon by the impact cutter bar (8, 9), is provided with a plurality of recesses (13, 14, 15), which extend parallel to the impact cutter bar (8, 9) and are spaced from one another.

2. Big roll baler according to claim 1, characterised in that the cross-section of each recess (13) is V-shaped, and in that the arms of the V are of equal length.

3. Big roll baler according to claim 1, characterised in that the cross-section of each recess (14) is V-shaped, and in that the arms of the V are of unequal length.

4. Big roll baler according to claim 1, characterised in that the cross-section of each recess (15) is semicircular.

**Revendications**

1. Presse à grandes balles pour chaume agricole avec un dispositif d'enveloppement pour envelopper la grande balle d'une bande de filet, où un rouleau d'alimentation (4) en bande de filet (6) est prévu, qui est agencé parallèlement à l'axe médian de l'espace de la presse, un dispositif tireur pouvant être mis en circuit et hors circuit pour la bande de filet (6) du rouleau d'alimentation (4) et pour l'introduction de la bande de filet (6) dans l'espace de la presse et un dispositif de séparation (7, 8, 9) pour séparer la bande de filet (6) entre le dispositif d'alimentation (4) et l'espace de la presse, qui se compose d'une lame de couteau frappeur (8, 9) pivotante et pouvant être tendue contre la force d'un ressort et d'une enclume stationnaire (7) formant contre-lame, caractérisée en ce que la surface (12) de l'enclume (7) qui est sollicitée par la lame du couteau frappeur (8, 9) est pourvue d'un certain nombre d'évidements (13, 14, 15) agencés parallèlement à la lame du couteau frappeur (8, 9) et à une certaine distance les uns des autres.

2. Presse à grandes balles selon la revendication 1, caractérisée en ce que la section transversale de chaque évidement (13) est en forme de V et en ce que les branches du V sont de longueur identique.

3. Presse pour grandes balles selon la revendication 1, caractérisée en ce que la section transversale de chaque évidement (14) est en forme de V et en ce que les branches du V sont de longueur différente.

4. Presse à grandes balles selon la revendication 1, caractérisée en ce que la section transversale de chaque évidement (15) est en forme de demi-cercle.

EP 0 341 517 B1

FIG. 1

FIG. 2

FIG. 3

FIG. 4

FIG. 5